# EUROPÄISCHE PATENTSCHRIFT

(11) **EP 2 092 821 B1**
(45) Veröffentlichungstag und Bekanntmachung des Hinweises auf die Patenterteilung: **11.11.2015**
(21) Anmeldenummer: 09450036.0
(22) Anmeldetag: 19.02.2009
(51) Int. Cl.: A01K 5/02

(54) **Anlage zur Austeilung von Flüssigfutter**
Distribution plant for liquid animal feed
Installation de répartition d'alimentation liquide pour bétail

(30) Priorität: 20.02.2008 AT 2712008
(43) Veröffentlichungstag der Anmeldung: 26.08.2009
(73) Patentinhaber: Schauer Agrotronic GmbH, 4731 Prambachkirchen (AT)
(72) Erfinder: Vogl, Gerhard, Dipl.-Ing., 4070 Eferding (AT)
(74) Vertreter: Ofner, Clemens

(56) Entgegenhaltungen:
- EP-A- 1 203 529
- DE-A1- 10 047 690
- DE-C1- 4 236 375
- GB-A- 2 259 652

## Beschreibung

Die Erfindung begrifft eine Anlage zur Austeilung von Flüssigfutter mit einem vorzugsweise als Mischbehälter ausgebildeten Wiegebehälter mit nachgeordneter Futterpumpe zur Beschickung einer Zubringerleitung für eine aus wenigstens zwei Leitungszweigen mit je mehreren Ausgabestellen bestehende Austeilleitung und einem Vorrats- und Auffangbehälter für Wasser, der über einer Wasserpumpe nachgeordnete Wasserleitungen und Absperrventile mit den Leitungszweigen zur Weiterförderung des nach deren Beschickung mit der Futterpumpe in den Leitungszweigen verbleibenden Futterreste zur Endausteilung, Weitergabe in einen anderen Futterleitungszweig oder Rückführung über eine dann freigegebene Rückführleitung in den Vorratsbehälter verbunden ist, wobei eine zentrale Steuereinheit die Arbeitsabläufe steuert.

Anlagen dieser Art, bei denen eine in den Bereich des Wiegebehälters zurückführende Ringleitung als Austeilleitung Verwendung findet, sind aus der EP 0 126 240 A und der DE 34 19 842 A bekannt. Im letzteren Fall ist die Ringleitung mit einem in einen Zwischenbehälter sowie einem zu einem Ablauf führenden Auslaß versehen, wobei ein Teil des verdrängten Wassers für die Aufbereitung einer nächsten Futtermischung Verwendung finden kann. Ein Teil dieses Wassers kann auch für das Nachdrücken eines Futterrestes in der Austeilleitung verwendet werden. Nachteilig bei diesen Ausführungen ist, dass das im Zwischenbehälter enthaltende Wasser stark durch Futterreste kontaminiert ist. Um solche Kontaminierungen zu vermeiden oder einzuschränken, sind nach der EP 0 296 260 A Trennkörper zwischen Futter- und Wassersäule vorgesehen. Nach der AT 400 995 B wird das zur Restfutterförderung verwendete Wasser durch Drucklufteinsatz in den Mischbehälter zurückgeblasen und zur Zubereitung der nächsten Futtermischung verwendet. Nach der DE 298 23 032 U1 und DE 42 06 728 A werden getrennt ein Brauchwasser- und ein Frischwassertank verwendet. Alle diese bekannten Konstruktionen sind äußerst aufwendig wegen des großen zusätzlichen Anlagenaufwandes, wobei sich weitere Schwierigkeiten beim Betrieb ergeben.

Aus der DE 34 19 842 A ist eine Anlage zum Austeilen von Flüssigfutter bekannt, bei der eine dem im Mischbehälter nachgeordnete Förderpumpe über einen Durchflußzähler in eine Zubringerleitung für eine als Ringleitung ausgebildete und wenigstens zwei am Ringende wieder zusammengeführte und mit einer Rückführleitung verbundene Zweige aufweisende Futterausteilleitung fördert. Bei Betriebsbeginn sind die erwähnten Leitungen mit Wasser gefüllt, das nun bei der Futterförderung und Austeilung über die Rückführleitung einen dem Mischbehälter zugeordneten Vorratsbehälter zugeführt wird. Nach Entleerung des Futtermischbehälters wird das im Vorratsbehälter enthaltene Wasser schlagartig in den Mischbehälter geleitet und nun zum Nachdrücken der Futterportionen in den Zweigen der Austeilleitung verwendet, wobei vorgesehen ist, verschiedene Futtermischungen immer gesondert zuzubereiten und dann den dafür bestimmten Austeilstellen über durch Ventile freigegebene Teile der Ringleitung zuzuführen. Die Dosierung kann zum Teil über den Durchflußzähler, der einmal mit dem Flüssigfutter und mit der Endausteilung mit dem von der Pumpe aus dem Mischbehälter geförderten Wasser betrieben werden. Der Mischbehälter ist mit einem Ablassventil für die Entsorgung nach Fütterungsende ausgestattet. Die Rückführleitung selbst kann wahlweise mit dem Mischbehälter zur Rückförderung eines Futterrestes oder zur Austragung von Förderwasser mit einem Ablass verbunden werden. Nachteilig bei dieser Ausführung ist, dass nach dem ersten Durchlauf des Futters in den Vorratsbehälter verdrängtes Wasser gefordert wird, das stark mit Futterresten kontaminiert sein kann. Über dies kann der Durchflußzähler beim Futter- bzw. Wasserdurchsatz verschiedene Messwerte angeben, die die Genauigkeit der Futterausteilung beeinträchtigen.

Um die Anlage zu vereinfachen und trotzdem eine weitgehende Sicherheit gegen Kontaminierung des Nachdrückwassers zu erzielen, sieht die AT 410 622 B vor, die Futterzubringerleitung mit gesonderten Leitungszweigen zu verbinden, die jeweils mehrere Ausgabestellen beschicken, wobei an jeden Leitungszweig an dem von der Zubringerleitung abweisenden Ende ein Vorratsbehälter angeschlossen ist, der das bei zunächst mit Wasser gefülltem Leitungszweig vom zugeführten Futter verdrängte Wasser aufnimmt und eine Pumpe enthält, über die das Wasser wieder in den Leitungszweig oder in den Mischbehälter zurückgedrückt werden kann. Die Füllmenge des Leitungszweiges wird durch einen kleinen Leitungsquerschnitt kleingehalten. Bei dem Zurückdrücken des Futters im Leitungszweig kann die Restfuttermenge ausgeteilt oder in den Mischbehälter zurückgeführt werden. Das zum Nachdrücken verwendete Wasser wird durch Reinwasserzufuhr weitergedrückt und zum Anmischen der nächsten Futtercharge verwendet. In der Praxis ergibt sich besonders bei mehreren Leitungszweigen ein erhöhter Aufwand durch die Auffangbehälter und Pumpen sowie die Notwendigkeit, den Wasservorrat in den Auffangbehältern zu ergänzen. Außerdem ist eine exakte Einzeldosierung bei der Austeilung der Restfuttermenge nicht immer gewährleistet.

Aufgabe der Erfindung ist es, eine Anlage der letztgenannten Art unter Beibehaltung der hinsichtlich der Kontaminierung vorhandenen Vorteile zu schaffen, die in der Konstruktion und im Anlagenaufwand vereinfacht ist, trotzdem eine erhöhte Dosiergenauigkeit auch bei der Austeilung einer Restfuttermenge gewährleistet und eine genaue Abstimmung zwischen den Meßergebnissen am Wiegebehälter und der tatsächlichen Fördermenge sowie im Bedarfsfall eine Nacheichung des Wiegebehälters ermöglicht und sowohl die Reinigung des Wiegebehälters als auch eine genaue Positionierung einer Restfuttermenge in der Austeilleitung gestattet.

Die Hauptaufgabe der Erfindung wird dadurch gelöst, dass die Leitungszweige der Austeilleitung Endabsperrventile aufweisen, wobei die Ventile an dem einen Ende gesteuert gesondert mit der Futterzubringerleitung, über ein weiteres Ventil mit der Wasserleitung und mit dem oder den anderen Ende der anderen Leitungszweigen verbindbar sind, die Ventile am anderen Ende der Leitungszweige untereinander, mit der Wasserleitung und der Rückführungsleitung verbindbar sind, und in der Wasserleitung ein Durchflußzähler zur Bestimmung der jeweils zugeführten Wassermenge vorgesehen ist, wobei ein bereits vom Futter entleerter Leitungszweig als Pufferbehälter verwendbar ist, dessen Wasserinhalt durch das weitere über den Durchflußzähler zugeführte Wasser in einen eine auszuteilende Restfuttermenge enthaltenden Leitungszweig überschiebbar ist.

Über den Durchflußzähler kann direkt die Restmenge des im Leitungszweig befindlichen Flüssigfutters durch Öffnen der Auslaßventile an den jeweiligen Abgabestellen dosiert werden. Wie eingangs bereits erwähnt, wird vorzugsweise das Wasser aus einem nicht mit Futter gefüllten Leitungszweig verwendet. Man kann Restfutter aus dem letzten Leitungszweig vorgeordneten Leitungszweigen über das Wasser entweder in den letzten Leitungszweig fördern oder in den Mischbehälter zurückführen. Nach einer Variante wird das Flüssigfutter aus diesen vorgeordneten Leitungszweigen in den Mischbehälter zurückgedrückt und von dort aus in den nächsten für die Fütterung mit gleichem Futter bestimmten Leitungszweig gedrückt und schließlich, wie schon oben beschrieben, verbleibendes Restfutter über den letzten Leitungszweig ausgegeben. Da der Durchflußzähler nur mit Wasser beaufschlagt wird, ergibt sich eine erhöhte Messgenauigkeit. Die entscheidenden Vorteile der zuletzt behandelten AT 410 622 B hinsichtlich der Vermeidung von Kontaminierungen bleiben erhalten.

Nach einer Weiterbildung wird vorgesehen, dass nach dem Durchflußzähler von der Wasserleitung über ein gesondertes Ventil eine zum Wiegebehälter führende Leitung abzweigt. Dabei ist es möglich, zunächst durch Vergleich der Meßwerte des Durchflußzählers und der Wiegeeinrichtung des Wiegebehälters diese Wiegeeinrichtung im Bedarfsfall nachzueichen. Auch bei der Wasserzufuhr zur Flüssigfutterzubereitung ist eine doppelte Mengenkontrolle über die Wiegeeinrichtung und den Durchflußzähler möglich.

In weiterer Ausgestaltung der Erfindung zweigt von der Futterzubringerleitung zwischen der Futterpumpe und den Leitungszweigen über ein zusätzliches Ventil eine weitere, zum Wiegebehälter führende Leitung ab, über die mittels der Futterpumpe bei gesperrten Leitungszweigen in den Wiegebehälter eingebrachtes Wasser, gegebenenfalls unter Zugabe von Reinigungsmitteln, im Kreislauf geführt werden kann, wobei vor dem zusätzlichen Ventil ein sperrbarer Auslaß zum Austragen des Waschwasser nach erfolgter Reinigung vorgesehen ist. Damit ist es möglich, einfach durch Ventilsteuerung und Betätigung der Pumpe die notwendige Reinigung des Mischbehälters durchzuführen.

Wenn der für die Verteilung einer Restfuttermenge bestimmten Leitungsabzweig nicht zur Gänze mit Restfutter gefüllt ist, kann man durch geregelte Wasserzufuhr von dem einen oder von beiden Enden her diese Restfuttermenge zu jenen Abgabestellen positionieren, an denen die Austeilung des Futterrestes vorgesehen ist.

Die vorstehend erwähnte Nachpositionierung und auch die Überwachung des gesamten Betriebes bei der Fütterung wird schließlich dadurch erleichtert, dass die Futterzubringerleitung und/oder wenigstens ein zur Futterrestausteilung bestimmter Leitungszweig zumindest an der sichtbaren Seite aus transparentem Material besteht.

Weiter Einzelheiten und Vorteile des Erfindungsgegenstandes entnimmt man der nachfolgenden Zeichnungsbeschreibung.

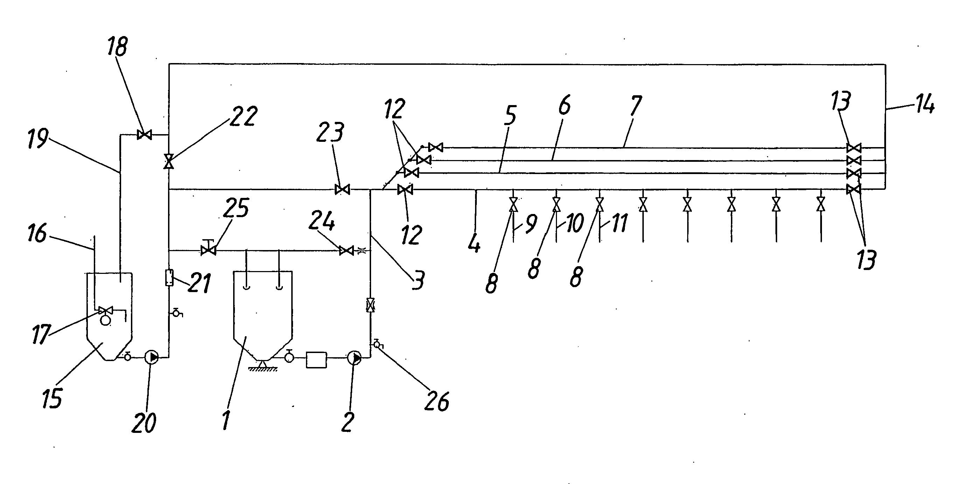

Die Zeichnung zeigt als Ausführungsbeispiel ein Schema der für die Erfindung wesentlichen Teile der Anlage.

Die Anlage besitzt einen als Wiege- und vorzugsweise Mischbehälter ausgebildeten Vorratsmischbehälter 1 für Flüssigfutter, an den eine Förderpumpe 2 für das Flüssigfutter angeschlossen ist, die das Futter in eine Zubringerleitung 3 fördert, die in mehrere Leitungszweige 4, 5, 6, 7 aufgespaltet ist, von denen jeder zu einer Reihe von mit Ausgabeventilen 8 ausgestatteten Abgabestellen 9, 10, 11 usw. führt. Jeder Leitungszweig 4 bis 7 ist über ein Ventil 12 an die Zubringerleitung 3 und ebenfalls über ein Ventil 13 an eine Wasserleitungszuführung 14 angeschlossen.

Für die Wasserzuführung in die Leitung 14 ist ein Vorrats- und Auffangbehälter 15 vorgesehen, der von einer Wasserleitung 16 über ein Einlaßventil 17 beschickt werden kann und eine über ein weiteres Ventil 18 sperrbare Rücklaufleitung 19 enthält. Das im Behälter 15 vorhandene Wasser kann über eine Wasserpumpe 20 und einen Durchflusszähler 21 sowie ein Ventil 22 mit der Wasserleitung 14 und über ein weiteres Ventil 23 mit der Leitung 3 verbunden werden.

Beim Fütterungsbetrieb werden über das jeweils zugeordnete Ventil 12 bei eingeschalteter Pumpe 2 die Leitungszweige 4 bis 7 meist nacheinander mit Flüssigfutter beschickt, welches dann über die Dosierventile 8 an den Ausgabestellen 9, 10, 11 usw. ausgeteilt wird. Ein über den Leitungszweig 5, 6, 7 verbleibender Futterrest kann beim Öffnen der beiden Absperrorgane 12 und 13 des jeweiligen Leitungszweiges bei eingeschalteter Pumpe 20 über die Leitung 14 zugeführtes Wasser in die Leitung 3 und über ein weiteres Ventil 24 in den Behälter 1 zurückgefördert werden. Nach Entleerung der Leitungszweige 5, 6, 7 sind diese nun mit Wasser gefüllt, welches bei der nächsten Fütterung durch Druckwasserzuführung über das Ventil 12 und das Ventil 13 in die Leitung 14 und von dieser über das Ventil 18 und die Leitung 19 in den Behälter 15 zurückgeführt wird. In den Behälter 1 zurückgeführtes Futter kann bei der Futterzufuhr zum nächsten Leitungszweig, z. B. 6 oder 5, wieder eingesetzt werden. Bei der Rückführung bestimmt der Durchflusszähler 21 über die erfasste Wassermenge zugleich die rückgeführte Futtermenge. In Sonderfällen ist es auch möglich, über die Ventile 13 zwei Leitungszweige zu verbinden und einen Futterrest aus dem einen Leitungszweig in den nächsten zu übertragen.

Für den Leitungszweig 4 ist beim Ausführungsbeispiel eine Austeilung des nach Abschalten der Pumpe 2 in diesem Leitungszweig verbleibenden Futterrestes vorgesehen. Normalerweise wird dazu das Ventil 13 geöffnet, Druckwasser zugeführt und es werden jene Ausgabeventile 8 der Reihe nach geöffnet, an deren Ausgabestellen 9, 10, 11 die Austeilung dieser Restfuttermenge vorgesehen ist. Es besteht aber auch die Möglichkeit, zumindest nach teilweiser Entleerung des Leitungszweiges 4 den Futterrest durch wechselweise Wasserbeaufschlagung und Wasserauslass über die Ventile 12 und 13 im Leitungszweig 4 zur jeweils vorgesehenen Ausgabestelle 9, 10, 11 usw. zu verschieben und dort auszuteilen. Dieser Vorgang wird dadurch erleichtert, dass zumindest der Leitungszweig 4 aus transparentem Material hergestellt ist, sodass die Positionierung des Futterrestes beobachtet werden kann.

Für das Anmischen einer neuen Futtercharge oder auch nur für eine Eichung der Wiegeeinrichtung des Behälters 1 kann über ein gesondert zu betätigendes Absperrorgan 23 Wasser in den Behälter 1 eingeleitet werden, dessen Menge wieder über den Durchflußzähler 21 bestimmt ist.

Für eine durchzuführende Reinigung des Behälters 1 wird bei geschlossenen Ventilen 12, 13, 18, 23 durch Einschalten der Pumpe 20 Wasser zugeführt. Dieses wird mittels der Pumpe 2 im Kreislauf über die Ventile 24, 25 in den Behälter 1 zurückgeführt, wobei der Kreislauf aufrecht erhalten wird, bis die erwünschte Reinigung erzielt wird, wonach die Flüssigkeit über einen Auslaß 26 entfernt werden kann. Dieser Waschvorgang im Kreislauf kann wiederholt werden, wobei bei einem ersten Waschvorgang dem Wasser auch ein Reinigungsmittel zugesetzt werden kann und der Behälter 1 in einem oder mehreren Waschvorgängen nachgespült wird.

Wie schon eingangs dargelegt wurde, ist eine (nicht dargestellte) zentrale Steuereinheit vorgesehen, welche die einzelnen Arbeitsabläufe nach an den jeweiligen Schritt angepassten Programm unter Erfassung der Messwerte des Durchflusszählers bzw. der Wiegeeinrichtung des Behälters, insbesondere durch Schaltung der Pumpen 2, 20 und der Ventile 8, 12, 13, 22, 23 sowie gegebenenfalls im Anmisch- oder Waschprogramm zusätzlich der Ventile 24 bzw. 25 steuert.

## Patentansprüche

1. Anlage zur Austeilung von Flüssigfutter mit einem vorzugsweise als Mischbehälter ausgebildeten Wiegebehälter (1) mit nachgeordneter Futterpumpe (2) zur Beschickung einer Zubringerleitung (3) für eine Austeilleitung, die aus wenigstens zwei mit Endabsperrventilen (12, 13) ausgestatteten Leitungszweigen (4, 5, 6, 7) mit je mehreren Ausgabestellen (9, 10, 11) besteht und einem Vorrats- und Auffangbehälter (15) für Wasser, der über einer Wasserpumpe (20) nachgeordnete Wasserleitungen (14) und weitere Absperrventile (22 bzw. 15) mit den Leitungszweigen (4, 5, 6, 7) zur Weiterförderung des nach deren Beschickung mit der Futterpumpe (2) in den Leitungszweigen (4, 5, 6, 7) verbleibenden Futterrestes zur Endausteilung, Weitergabe an einen anderen Futterleitungszweig oder Rückführung über eine dann freigegebene Rückführleitung (19) in den Vorratsbehälter (15) verbunden ist, wobei eine zentrale Steuereinheit die Arbeitsabläufe steuert, **dadurch gekennzeichnet, dass** von den Endabsperrventile (12, 13) der Leitungszweige (4 bis 7) der Austeilleitung die Endabsperrventile (12) an dem einen Ende gesteuert gesondert mit der Futterzubringerleitung (3), über ein weiteres Ventil (23) mit der Wasserleitung (14) und mit dem oder den anderen Ende der anderen Leitungszweigen (4 bis 7) verbindbar sind, die Endabsperrventile (13) am anderen Ende der Leitungszweige (4 bis 7) untereinander, mit der Wasserleitung (14) und der Rückführungsleitung (19) verbindbar sind, und in der Wasserleitung (14) ein Durchflusszähler (21) zur Bestimmung der jeweils zugeführten Wassermenge vorgesehen ist, wobei ein bereits vom Futter entleerter Leitungszweig (5 bis 7) als Pufferbehälter verwendbar ist, dessen Wasserinhalt durch das weitere über den Durchflusszähler (21) zugeführte Wasser in einen eine auszuteilende Restfuttermenge enthaltenden Leitungszweig (4) überschiebbar ist.

2. Anlage nach Anspruch 1, **dadurch gekennzeichnet, dass** nach dem Durchflusszähler (21) von der Wasserleitung (14) über ein gesondertes Ventil (25) eine zum Wiegebehälter (1) führende Leitung abzweigt.

3. Anlage nach den Ansprüchen 1 und 2, **dadurch gekennzeichnet, dass** von der Futterzubringerleitung (3) zwischen der Futterpumpe (2) und den Leitungszweigen (4 bis 7) über ein zusätzliches Ventil (24) eine weitere, zum Wiegebehälter (1) führende Leitung abzweigt, über die mittels der Futterpumpe (2) bei gesperrten Leitungszweigen (4 bis 7) in den Wiegebehälter (1) eingebrachtes Wasser, gegebenenfalls unter Zugabe von Reinigungsmitteln, im Kreislauf geführt werden kann und vor dem zusätzlichen Ventil (24) ein sperrbarer Auslass (26) vorgesehen ist.

4. Anlage nach einem der Ansprüche 1 bis 3, **dadurch gekennzeichnet, dass** die Futterzubringerleitung (3) und/oder wenigstens ein zur Futterrestausteilung bestimmter Leitungszweig (4) zumindest an der sichtbaren Seite aus transparentem Material besteht.

## Claims

1. A distribution plant for liquid animal feed with a weighing container (1) preferably designed as a mixing container with a downstream feed pump (2) for loading a supply line (3) for a distribution line, which consists of at least two line branches (4, 5, 6, 7) equipped with end shutoff valves (12, 13) and each having several output sites (9, 10, 11) and a storage and collection tank (15) for water, which is connected by means of water lines (14) downstream from a water pump (20) and additional shutoff valves (22 or 15) with the line branches (4, 5, 6, 7) to relay the residual feed that remains after loaded into the line branches (4, 5, 6, 7) with the feed pump (2) for final distribution, relaying to another supply line branch or returning to the supply tank (15) via a return line (19) that is then opened, wherein a central control unit controls the operating sequences, **characterized in that**, from the end shutoff valves (12, 13) of the line branches (4 to 7) of the distribution line, the end shutoff valves (12) controlled at the one end can be connected separately with the feed supply line (3), by way of another valve (23) with the water line (14), and with the other end of the other line branches (4 to 7), the end shutoff valves (13) at the other end of the line branches (4 to 7) can be connected with each other, with the water line (14) and the return line (19), and a flowmeter (21) is provided in the water line (14) for determining the respectively supplied water quantity, wherein a line branch (5 to 7) from which feed has already been evacuated can be used as a buffer tank, the water content in which can be shifted by the additional water supplied via the flowmeter (21) into a line branch (4) containing a residual feed quantity to be distributed.

2. The plant according to claim 1, **characterized in that** a line leading to the weighing container (1) branches away from the water line (14) by way of a separate valve (25) after the flowmeter (21).

3. The plant according to claims 1 and 2, **characterized in that** another line leading to the weighing container (1) branches away from the feed supply line (3) between the feed pump (2) and line branches (4 to 7) via an additional valve (24), through which water introduced into the weighing container (1), possibly with the addition of cleaning agents, can be circulated by means of the feed pump (2) with the line branches (4 to 7) locked, and that a lockable outlet (26) is provided before the additional valve (24).

4. The plant according to one of claims 1 to 3, **characterized in that** the feed supply line (3) and/or at least one line branch (4) intended for distributing residual feed consists of transparent material, at least on the visible side.

## Revendications

1. Installation de répartition d'alimentation liquide avec un récipient de balance (1) formé comme récipient mélangeur et avec une pompe à aliment (2) disposé en aval pour approvisionner un conduit d'amenée (3) pour un conduit de distribution qui consiste en au moins deux branches de conduit (4, 5, 6, 7) équipées de valves de fermeture d'extrémités (12, 13) et ayant chacune plusieurs postes de distribution (9, 10, 11) et un récipient de réserve et de collecte (15) pour de l'eau qui est relié via des conduits d'eau (14) montés en aval d'une pompe à eau (20) et via d'autres valves de fermeture (22 ou 15) aux branches de conduit (4, 5, 6, 7) pour l'avancement du reste d'aliment se trouvant dans les branches de conduit (4, 5, 6, 7) après approvisionnement par la pompe d'aliment (2), à la distribution finale, pour l'avancement à une autre branche de conduit d'aliment ou pour le retour par un conduit de retour (19) alors ouvert vers le récipient de réserve (15), une unité de commande centrale commandant alors les déroulements de travail, **caractérisé en ce que**, parmi les valves de fermeture d'extrémités (12, 13) des branches de conduit (4 à 7) du conduit de distribution, les valves de fermeture d'extrémités (12) à une extrémité sont aptes à être reliées séparément de manière commandée au conduit d'amenée (3) pour aliment et, via une autre valve (23), au conduit d'eau (14) et à la ou aux autres extrémités des autres branches de conduit (4 à 7) les valves de fermeture (13) à l'autre extrémité des branches de conduit (4 à 7) sont aptes à être reliées les unes aux autres, au conduit d'eau (14) et au conduit de retour (19), et **en ce qu'**un débitmètre (21) pour déterminer la quantité d'eau respective amenée chaque fois, est prévu dans le conduit d'eau (14), une branche de conduit (5 à 7) déjà vidé de l'aliment étant utilisable comme récipient tampon dont le contenu d'eau est transférable, vers une branche de conduit (4) contenant une quantité d'aliment à distribuer, par l'eau supplémentaire passant par le débitmètre (21).

2. Installation selon la revendication 1, **caractérisé en ce qu'**en aval du débitmètre (21), un conduit menant vers le récipient de balance (1) via une valve particulière (25), est dérivé du conduit d'eau (14).

3. Installation selon les revendications 1 et 2, **caractérisé en ce que** du conduit d'amenée (3), entre la pompe d'aliment (2) et les branches de conduit (4 à 7), via une valve supplémentaire (24), un autre conduit menant au récipient de balance (1) est dérivé, via lequel de l'eau introduite dans le récipient de balance (1) par la pompe d'aliment (2), alors que les branches de conduit (4 à 7) sont bloqués, peut être faite circuler, le cas échéant avec adjonction d'un produit de nettoyage, et **en ce qu'**une sortie obturable (26) est prévue en amont de la valve supplémentaire (24).

4. Installation selon l'une des revendications 1 à 3, **caractérisé en ce que** le conduit d'amenée d'aliment (3) et/ou au moins une branche de conduit (4) destinée à la distribution d'aliment consiste au moins sur le côté visible en un matériau transparent.
